# EUROPÄISCHE PATENTANMELDUNG

(11) **EP 0 964 001 A1**
(43) Veröffentlichungstag der Anmeldung: **15.12.1999**
(21) Anmeldenummer: 99110532.1
(22) Anmeldetag: 01.06.1999
(51) Int. Cl.: C08F 2/18

(54) **Verfahren zur Herstellung mikroverkapselter Polymerisate**

(30) Priorität: 12.06.1998 DE 19826048; 29.07.1998 DE 19834103
(71) Anmelder: Bayer Aktiengesellschaft, 51368 Leverkusen (DE)
(72) Erfinder: Halle, Olaf Dr., 51061 Köln (DE); Strüver, Werner Dr., 51375 Leverkusen (DE); Harrison, David Bryan Dr., 51373 Leverkusen (DE); Podszun, Wolfgang Dr., 51061 Köln (DE)

(57) **Zusammenfassung**

Bei der Polymerisation in wäßriger Phase suspendierter mikroverkapselter Monomertröpfchen erhält man Polymerisate mit hoher Oberflächenqualität, einem löslichen Anteil von unter 6 % bei einem Quellungsindex zwischen 1,3 und 9, wenn das Monomer einen aliphatischen Peroxyester als Initiator und die wäßrige Phase eine hydroxyaromatische Verbindung als Polymerisationsinhibitor enthält.

## Beschreibung

Die Erfindung betrifft ein Verfahren zur Herstellung mikroverkapselter Polymerisate hoher Oberflächenqualität durch Polymerisation in Mikrokapseln eingeschlossener Monomerer, das zu Polymerisaten mit einem löslichen Anteil von unter 6 % und einem Quellungsindex zwischen 1,3 und 9 führt.

In jüngerer Zeit haben Ionenaustauscher mit möglichst einheitlicher Teilchengröße (im folgenden "monodispers" genannt) zunehmend an Bedeutung gewonnen, weil bei vielen Anwendungen aufgrund der günstigeren hydrodynamischen Eigenschaften eines Austauscherbettes aus monodispersen Ionenaustauschern wirtschaftliche Vorteile erzielt werden können. Monodisperse Ionenaustauscher können durch Funktionalisieren von monodispersen Perlpolymerisaten erhalten werden. Eine der Möglichkeiten, monodisperse Perlpolymerisate herzustellen, besteht darin, durch Verdüsung von Monomer in eine kontinuierliche Phase monodisperse Monomertröpfchen zu erzeugen und diese dann durch Polymerisation auszuhärten. Die Ausbildung einheitlicher Tröpfchengrößen kann durch Schwingungsanregung unterstützt werden; so wird in der EP-A 0 51 210 ein Verfahren zur Herstellung kugelförmiger Monomertröpfchen mit einheitlicher Teilchengröße durch Schwingungsanregung eines laminaren Monomerstroms beschrieben. Soll die Monodispersität der Monomertröpfchen bei der Polymerisation erhalten bleiben, so muß die Koaleszenz sowie die Neubildung von Tröpfchen ausgeschlossen werden. Eine besonders wirksame Methode zur Verhinderung von Koaleszenz und Neubildung von Tröpfchen besteht in der Mikroverkapselung der Tröpfchen gemäß EP-A 0 046 535.

Eine weitere der Möglichkeiten, monodisperse Perlpolymerisate herzustellen, besteht im sogenannten seed/feed-Verfahren, wonach ein monodisperses Polymerisat ("Saat") im Monomer gequollen und dieses dann polymerisiert wird. Seed/feed-Verfahren werden beispielsweise in den EP-A 0 098 130 und EP-A 0 101 943 beschrieben. Eine Möglichkeit zur besonders exakten Übertragung der Korngrößenverteilung des Saatpolymers in das Perlpolymerisat ist in DE 19 634 393 beschrieben. Hierbei wird ein mikroverkapseltes Polymerisat als Saat eingesetzt.

Mikroverkapselte Saatpolymere sollen einen hohen Quellungsindex aufweisen, damit sie beim seed/feed-Verfahren eine große Menge des zugesetzten Monomeren aufnehmen können. Als Quellungsindex (QI) ist der Quotient aus dem Volumen des gequollenen Polymeren und dem Volumen des nicht gequollenen Polymeren definiert. Der Quellungsindex läßt sich in bekannter Weise durch den Gehalt an Vernetzer steuern: Niedrige Vernetzergehalte führen zu hohen Quellungsindices und umgekehrt. So weisen beispielsweise Styrolpolymerisate, die mit 0,2 bis 2,0 Gew.-% Divinylbenzol vernetzt sind, Quellungsindices von 2,5 bis 10 in Toluol auf. Niedrig vernetzte Saatpolymerisate haben allerdings einen recht hohen Anteil an nicht vernetzten, löslichen Polymeren. Dieser Anteil an nicht vernetzten, löslichen Polymeren im Saatpolymerisat ist in mehrfacher Hinsicht unerwünscht:
1. Die Polymerisation der gequollenen Saat kann dadurch gestört werden, daß die durch das zugesetzte Monomer aus der Saat herausgelösten Polymeranteile Verklebungen der Partikel untereinander verursachen.
2. Die Funktionalisierung zur Herstellung der Ionenaustauscher kann dadurch erschwert werden, daß die herausgelösten Polymeranteile in den zur Funktionalisierung eingesetzten Reaktionslösungen angereichert werden.
3. Die Endprodukte (Ionenaustauscher) können erhöhte Mengen löslicher Polymere enthalten, was zu einem unerwünschten Ausbluten (leaching) der Ionenaustauscher führen kann.

Es hat sich gezeigt, daß die Polymerisation von mikroverkapselten Monomertröpfchen nicht immer zu Perlpolymerisaten mit glatten Oberflächen führt: Es können Perlpolymerisate mit rauhen und/oder belegten Oberflächen entstehen. Für viele Anwendungen stellt eine Oberflächenrauhigkeit oder ein Oberflächenbelag keinen Nachteil dar, zumal ein Oberflächenbelag durch Nachbehandlung entfernt werden kann bzw. bei einer Funktionalisierung des Perlpolymerisats zum Ionenaustauscher mit der Kapselwand entfernt wird. Für einige Anwendungen werden jedoch Perlpolymerisate mit glatten Oberflächen gewünscht, so z.B. für den Einsatz der Perlpolymerisate als Saat in einem sogenannten seed/feed-Verfahren. In DE 19 647 291 wurde beschrieben, daß der Zusatz von wasserlöslichen Inhibitoren bei der Polymerisation von mikroverkapselten Monomertröpfchen zu Perlpolymerisaten mit glatter Oberfläche führt. Diese Perlpolymerisate besitzen jedoch neben einer glatten Oberfläche und einem hohen Quellungsindex einen auf den Quellungsindex bezogen unerwünscht hohen löslichen Anteil.

Die Aufgabe der vorliegenden Erfindung ist die Bereitstellung von mikroverkapselten vernetzten kugelförmigen Polymerisaten mit hoher Oberflächenglattheit, einem Quellungsindex zwischen 1,3 und 9 und einem Gehalt an löslichen Anteilen, der unter 6 % liegt.

Es wurde nun gefunden, daß Polymerisate mit niedrigen Vernetzergehalten und entsprechend hoher Quellbarkeit dann besonders glatte Oberflächen sowie niedrige Gehalte löslicher Polymeranteile aufweisen, wenn bei ihrer Herstellung hydroxyaromatische Verbindungen als Polymerisationsinhibitoren in der wäßrigen Phase sowie Peroxyester als Initiatoren eingesetzt werden.

Gegenstand der vorliegende Erfindung ist deshalb ein Verfahren zur Herstellung mikroverkapselter Polymere hoher Oberflächenqualität durch Polymerisation von Monomertröpfchen, enthaltend mindestens einen aliphatischen Peroxyester als Initiator, die in (in wäßriger Phase suspendierten) Mikrokapseln enthalten sind wobei die wäßrige Phase mindestens eine hydroxyaromatische Verbindung als Polymerisationsinhibitor enthält, der lösliche Anteil unter 6 % liegt und der Quellungsindex zwischen 1,3 und 9 liegt, dadurch gekennzeichnet, daß
a) 34 bis 99,7 Gew.-%, bevorzugt 34 bis 99,2 Gew.-%, besonders bevorzugt 39 bis 99,2 Gew.-%, ganz besonders bevorzugt 44 bis 99,2 Gew.-%, überaus bevorzugt 47 bis 99,2 Gew.-% Monomer,
b) 0,1 bis 15 Gew.-%, bevorzugt 0,6 - 15 Gew.-%, besonders bevorzugt 0,6 - 10 Gew.-%, ganz besonders bevorzugt 0,6 bis 5 Gew.-%, überaus bevorzugt 0,6 - 2 Gew.-% Vernetzer,
c) 0,2 bis 1,0 Gew.-% Polymerisationsinitiator und
d) 0-50 Gew.-%, bevorzugt 0-40 Gew.-% Zusatzstoffe,
   wobei sich die Prozentangaben auf die Summe der Komponenten a) bis c) beziehen eingesetzt werden.

Die erfindungsgemäß hergestellten mikroverkapselten Polymerisate können direkt oder über die Zwischenstufe durch ein Saat/Zulauf-Verfahren vergrößerter Polymerisatteilchen durch Funktionalisierung in Ionenaustauscher überführt werden.

Unter "Monomer" werden Verbindungen mit 1 polymerisierbaren C=C-Doppelbindung verstanden, wie beispielsweise Styrol, Vinyltoluol, Ethylstyrol, α-Methylstyrol, Chlorstyrol, Chlormethylstyrol, Acrylsäure, Methacrylsäure, Acrylsäureester, Methacrylsäureester, Acrylnitril, Methacrylnitril, Acrylamid, Methacrylamid und Mischungen dieser Verbindungen.

Bevorzugt sind Styrol sowie Mischungen aus Styrol und den vorgenannten Monomeren.

Als Vernetzer können Verbindungen mit mindestens 2, vorzugsweise 2 oder 3 polymerisierbaren C=C-Doppelbindungen verwendet werden. Bevorzugte Vernetzer umfassen Divinylbenzol, Divinyltoluol, Trivinylbenzol, Divinylnaphthalin, Trivinylnaphthalin, Diethylenglykoldivinylether, 1,7-Octadien, 1,5-Hexadien, Ethylenglykoldimethacrylat, Triethylenglykoldimethacrylat, Trimethylolpropantrimethacrylat, Allylmethacrylat und Methylen-N,N'-bisacrylamid. Die Art der Vernetzer kann im Hinblick auf die spätere Verwendung des Polymerisats ausgewählt werden.

So sind beispielsweise Acrylat- bzw. Methacrylat-Vernetzer wenig geeignet, wenn aus dem Polymerisat ein Kationenaustauscher durch Sulfonierung hergestellt werden soll, da die Esterbindung unter den Sulfonierungsbedingungen gespalten wird. Divinylbenzol ist in vielen Fällen, insbesondere auch zur Herstellung stark saurer Kationenaustauscher, geeignet. Für die meisten Anwendungen sind kommerzielle Divinylbenzolqualitäten, die neben den Isomeren des Divinylbenzols auch Ethylvinylbenzol enthalten, ausreichend. Die Monomeren sollen in der wäßrigen Phase weitgehend unlöslich sein. In Wasser teilweise lösliche Monomere wie Acrylsäure, Methacrylsäure und Acrylnitril werden daher vorzugsweise im Gemisch mit wasserunlöslichen Monomeren verwendet. Es ist auch möglich, die Löslichkeit der Monomeren in der wäßrigen Phase durch Salzzusatz zu erniedrigen.

Für die Mikroverkapselung der Monomertröpfchen kommen die für diesen Einsatzzweck bekannten Materialien in Frage, insbesondere Polyester, natürliche und synthetische Polyamide, Polyurethane, Polyharnstoffe. Als natürliches Polyamid ist Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine und synthetischen Polyelektrolyten verstanden. Geeignete synthetische Polyelektrolyte sind Copolymerisate mit eingebauten Einheiten von z.B. Maleinsäure, Acrylsäure, Methacrylsäure, Acrylamid und Methacrylamid. Gelatinehaltige Kapselwände können mit üblichen Hilfsmitteln, wie z.B. Formaldehyd oder Glutardialdehyd, gehärtet werden. Gelatine-haltige Kapselmaterialien sind im Sinne der Erfindung bevorzugt.

Die Verkapselung von Monomertröpfchen mit Gelatine, gelatinehaltigen Koazervaten und gelatinehaltigen Komplexkoazervaten wird z.B. in der EP-A 0 046 535 eingehend beschrieben. Die Methoden der Verkapselung mit synthetischen Polymeren sind bekannt. Hierfür gut geeignet ist beispielsweise die Phasengrenzflächenkondensation, bei der eine im Monomertröpfchen gelöste Reaktivkomponente (z.B. ein Isocyanat oder ein Säurechlorid) mit einer zweiten, in der wäßrigen Phase gelösten Reaktivkomponente (z.B. einem Amin), zur Reaktion gebracht wird.

Die zu verkapselnden Monomeren enthalten neben Vernetzer auch mindestens einen Initiator zur Auslösung der Polymerisation. Für das erfindungsgemäße Verfahren geeignete Polymerisationsinitiatoren c) sind aliphatische Peroxyester entsprechend den Formeln (I), (II) oder (III) 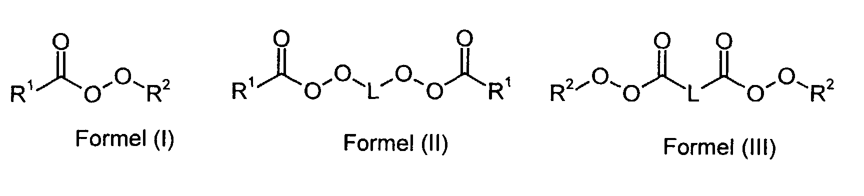 worin
- R¹: einen Alkylrest mit 2 bis 20 C-Atomen oder einen Cycloalkylrest mit bis zu 20 C-Atomen,
- R²: einen verzweigten Alkylrest mit 4 bis 12 C-Atomen und
- L: einen Alkylrest mit 2 bis 20 C-Atomen oder einen Cycloalkylenrest mit bis zu 20 C-Atomen bedeuten.

Bevorzugte aliphatische Peroxyester gemäß Formel (I) sind z.B.
tert.-Butylperoxyacetat,
tert.-Butylperoxyisobutyrat,
tert.-Butylperoxypivalat,
tert.-Butylperoxyoctoat,
tert. -Butylperoxy-2-ethylhexanoat,
tert.-Butylperoxyneodecanoat,
tert.-Amylperoxyneodecanoat,
tert.-Amylperoxypivalat,
tert.-Amylperoxyoctoat,
tert.-Amylperoxy-2-ethylhexanoat und
tert.-Amylperoxyneodecanoat.

Bevorzugte aliphatische Peroxyester gemäß Formel (II) sind z.B.
2,5-Bis(2-ethylhexanoylperoxy)-2,5-dimethylhexan,
2,5-Dipivaloyl-2,5-dimethylhexan und
2,5-Bis(2-neodecanoylperoxy)-2,5-dimethylhexan.

Bevorzugte aliphatische Peroxyester gemäß Formel (III) sind z.B.
Di-tert.-butylperoxyazelat und
Di-tert.-amylperoxyazelat.

Besonders bevorzugte aliphatische Initiatoren entsprechen der Formel (I). Die Initiatoren werden im allgemeinen in Mengen von 0,05 bis 2,5 Gew.-%, vorzugsweise 0,2 bis 1,0 Gew.-%, besonders bevorzugt 0,3-0,8 Gew.-%, bezogen auf die Summe von Monomer + Vernetzer, angewendet.

Die zu verkapselnden Monomeren können auch Zusatzstoffe enthalten. Geeignete Zusatzstoffe sind z.B. Porogene, die im Polymerisat eine makroporöse Struktur erzeugen. Hierfür sind organische Lösungsmittel geeignet, die das gebildete Polymerisat schlecht lösen bzw. quellen. Beispielhaft seien genannt Hexan, Octan, Isooctan, Isododecan, Methylethylketon und Octanol.

Weitere geeignete Zusatzstoffe sind Polymere.

Bevorzugte Polymere sind solche der vorgenannten Monomeren, besonders bevorzugt solche des Styrols.

Die mittlere Teilchengröße der verkapselten Monomertröpfchen beträgt vorzugsweise 10 bis 1.000 µm, insbesondere 100 bis 1.000 µm. Das erfindungsgemäße Verfahren ist zur Herstellung monodisperser Polymerisate, insbesondere solcher, die in der EP-A 0 046 535 beschrieben sind, geeignet.

Polymerisationsinhibitoren im Sinne der Erfindung sind hydroxyaromatische Verbindungen, die die radikalische Polymerisation von Verbindungen mit polymerisierbaren C=C-Doppelbindungen verlangsamen oder ganz unterdrücken.

Hydroxyaromatische Verbindungen umfassen unsubstituierte Hydroxyaromaten wie Resorcin, Hydrochinon, Brenzkatechin, Pyrogallol, aber auch substituierte Hydroxyaromaten wie Hydrochinonmonomethylether, tert.-Butylbrenzkatechin, p-Nitrosophenol und Kondensationsprodukte aus Phenolen mit Aldehyden. Resorcin ist besonders bevorzugt.

Es hat sich in vielen Fällen als vorteilhaft erwiesen, wenn die erfindungsgemäß zu verwendenden Polymerisationsinhibitoren in der wäßrigen Phase löslich sind. "Löslich" bedeutet in diesem Zusammenhang, daß sich mindestens 1000 ppm bei 70°C in der wäßrigen Phase rückstandlos auflösen lassen. Durch geeignete Wahl der Bedingungen kann man dies oft beeinflussen: Beispielsweise kann man die Löslichkeit eines phenolischen Inhibitors durch einen hohen pH-Wert verbessern.

Die Menge des Polymerisationsinhibitors wird so gewählt, daß die Polymerisation von Monomer oder Monomer und Vernetzer außerhalb der Kapselwand verhindert wird. Die notwendige Menge des Polymerisationsinhibitors hängt neben der Menge des verwendeten Polymerisationsinhibitors auch wesentlich von der Inhibitoraktivität und der Löslichkeit des Inhibitors in der wäßrigen Phase ab. Die optimale Menge läßt sich durch Versuche ermitteln. Der Inhibitorgehalt handelsüblicher Vernetzer, der im allgemeinen zwischen 0,001 und 0,01 Gew.-%, bezogen auf Vernetzer, beträgt, reicht für die Zwecke der vorliegenden Erfindung nicht aus; er trägt aber - zusammen mit dem zusätzlich zugesetzten Inhibitor - zum gewünschten Effekt bei. Übliche Mengen Polymerisationsinhibitor liegen im Bereich von 10 bis 1.000 ppm, vorzugsweise 10 bis 500 ppm, insbesondere 10 bis 250 ppm, ganz besonders bevorzugt 20 bis 200 ppm, bezogen auf die Summe (wäßrige Phase + Inhibitor).

Handelsübliche Monomere und Vernetzer können zur Stabilisierung Inhibitoren enthalten. Die Konzentration ist jedoch so gering, daß die für die Erfindung notwendige Konzentration in der wäßrigen Phase nicht erreicht wird und der erfindungsgemäße Effekt nicht auftritt.

Die Polymerisation der verkapselten Monomertröpfchen zum kugelförmigen Polymerisat kann zweckmäßigerweise in Anwesenheit eines oder mehrerer Schutzkolloide und gegebenenfalls eines Puffersystems in der wäßrigen Phase erfolgen. Schutzkolloide umfassen natürliche und synthetische wasserlösliche Polymere, wie z.B. Gelatine, Stärke, Polyvinylalkohol, Polyvinylpyrrolidon, Polyacrylsäure, Polymethacrylsäure und Copolymerisate aus Acrylsäure, Methacrylsäure, Acrylsäureestern und Methacrylsäureestern. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Bei der Polymerisation von mit Gelatine oder gelatinehaltigen Komplexkoazervaten verkapselten Monomertröpfchen ist als Schutzkolloid Gelatine besonders gut geeignet. Die Einsatzmenge der Schutzkolloide beträgt im allgemeinen 0,025 bis 1,5 Gew.-%, vorzugsweise 0,05 bis 0,75 Gew.-%, bezogen auf die wäßrige Phase.

Die Polymerisation kann in Anwesenheit eines Puffersystems durchgeführt werden. Bevorzugt werden Puffersysteme, die den pH-Wert der wäßrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflußt. Besonders gut geeignete Puffersysteme enthalten Phosphate oder Borate. Die Begriffe Phosphat und Borat im Sinne der Erfindung umfassen auch die Kondensationsprodukte der ortho-Formen entsprechender Säuren und Salze. Die Konzentration an Phosphat bzw. Borat in der wäßrigen Phase beträgt 0,5 bis 500 mmol/l, vorzugsweise 2,5 bis 100 mmol/l.

Die Rührgeschwindigkeit bei der Polymerisation ist wenig kritisch und hat im Gegensatz zur herkömmlichen Perlpolymerisation keinen Einfluß auf die Teilchengröße. Es werden niedrige Rührgeschwindigkeiten angewendet, die ausreichen, die Mikrokapseln in Schwebe zu halten und die Abführung der Polymerisationswärme unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wäßriger Phase im allgemeinen beträgt 1:0,75 bis 1:20, vorzugsweise 1:1 bis 1:6.

Die Polymerisationstemperatur richtet sich nach der Zerfallstemperatur des eingesetzten Initiators. Sie beträgt im allgemeinen 50 bis 150°C, vorzugsweise 55 bis 100°C. Die Polymerisation dauert 0,5 bis einige Stunden. Es hat sich bewährt, ein Temperaturprogramm anzuwenden, bei dem die Polymerisation bei niedriger Temperatur, z.B. 60°C, begonnen und mit fortschreitendem Polymerisationsumsatz die Reaktionstemperatur gesteigert wird. Auf diese Weise läßt sich z.B. die Forderung nach sicherem Reaktionsverlauf und hohem Polymerisationsumsatz sehr gut erfüllen. Nach der Polymerisation kann das Polymerisat mit üblichen Mitteln, z.B. durch Filtrieren oder Dekantieren, isoliert und gegebenenfalls nach ein oder mehreren Wäschen getrocknet werden.

Das Material der Kapselwand befindet sich im wesentlichen auf der Oberfläche des Perlpolymerisats. Sofern gewünscht, kann dieses Material durch eine Nachbehandlung entfernt werden. Gelatine und gelatinehaltige Komplexkoazervate lassen sich leicht mit Säuren oder Laugen abwaschen.

In den meisten Fällen ist es jedoch nicht notwendig, das Kapselwandmaterial gesondert abzuwaschen, da es unter den Bedingungen einer Funktionalisierung des Polymerisates zu Ionenaustauschern ohnehin entfernt wird.

Die durch das erfindungsgemäße Verfahren hergestellten Perlpolymerisate zeichnen sich durch eine glatte Oberfläche sowie durch einen geringen löslichen Anteil bezogen auf den Quellungsindex aus.

### Beispiele

### Lösliche Anteile

Zur Bestimmung der löslichen Anteile wurden 5 bis 7 g Perlpolymerisat in eine Extraktionshülse eingewogen und über Nacht in einer Soxhlet-Apparatur mit 800 ml Toluol extrahiert (Badtemperatur: 140°C). Das Extrakt wurde über eine Nutsche mit Schwarzbandfilter filtriert und am Rotationsverdampfer auf ca. 1 ml eingeengt. Anschließend wurden 300 ml Methanol zugesetzt und im Vakuum am Rotationsverdampfer bis zur Gewichtskonstanz getrocknet. Von jeder Probe wurde eine Doppelbestimmung durchgeführt.

### Quellung

Die Quellung der Perlpolymerisate wurde in Toluol bei Raumtemperatur untersucht. Dazu wurden 10 ml getrocknetes, gesiebtes Perlpolymerisat in einem 100 ml-Standzylinder eingewogen. Der Quotient aus dem Volumen der Schüttung (V₀) und der eingewogenen Menge (m) ergab das Schüttvolumen (V_{sch}). Der Standzylinder wurde mit dem Quellmittel auf 100 ml aufgefüllt und 10 bis 20 h stehen gelassen. Dabei wurde öfter geschüttelt und darauf geachtet, daß eventuell auftretende Luftblasen entweichen können. Das Volumen der gequollenen Schüttung wurde abgelesen und ergab V₁. Der Quotient aus V₁ und V₀ ist definitionsgemäß der Volumen-Quellungsindex (QI/_{v/v}).

Die Prozentangaben der nachfolgenden Beispiele beziehen sich jeweils auf das Gewicht.

### Beispiel 1 (erfindungsgemäß)

### Herstellung eines mikroverkapselten Polymerisats

In einem 4 l Glasreaktor werden 1.960 ml entionisiertes Wasser vorgelegt. Hierin werden 630 g einer mikroverkapselten Mischung aus 0,5 Gew.-% Divinylbenzol und 0,3 Gew.-% Ethylstyrol (gemeinsam eingesetzt als 63 %iges handelsübliches Divinylbenzol-Isomerengemisch in Ethylstyrol), 0,5 % tert.Butylperoxy-2-ethylhexanoat und 98,7 % Styrol gegeben, wobei die Mikrokapsel aus einem mit Formaldehyd gehärteten Komplexkoazervat aus Gelatine und einem Acrylamid/Acrylsäure-Copolymerisat besteht. Die mittlere Teilchengröße beträgt 231 µm. Die Mischung wird mit einer Lösung aus 2,4 g Gelatine, 4 g Natriumhydrogenphosphatdodekahydrat und 100 mg Resorcin (entspricht 49 ppm, bezogen auf die wäßrige Phase) in 80 ml entionisiertem Wasser versetzt, langsam gerührt und unter Rühren 10 h bei 75 °C polymerisiert. Anschließend wird durch Temperaturerhöhung auf 95°C auspolymerisiert. Der Ansatz wird über ein 32 µm-Sieb gewaschen und getrocknet. Man erhält 605 g eines kugelförmigen, mikroverkapselten Polymerisats mit glatter Oberfläche. Das Polymerisat erscheint optisch transparent; die mittlere Teilchengröße beträgt 220 µm. Das Polymerisat besitzt einen Quellungsindex von 6,0 und einen löslichen Anteil von 1,8 %.

### Beispiel 2 (erfindungsgemäß)

### Herstellung eines mikroverkapselten Polymerisats ohne Oberflächenbelag

Versuchsdurchführung analog Beispiel 1, jedoch wird als Monomer eine Mischung aus 0,43 Gew.-% Divinylbenzol und 0,25 Gew.-% Ethylstyrol (gemeinsam eingesetzt als 63%, handelsübliches Isomerengemisch aus Divinylbenzol und Ethylstyrol), 0,5 Gew.-% tert.Butylperoxy-2-ethylhexanoat und 98,82 Gew.-% Styrol eingesetzt. Die mittlere Größe der mikroverkapselten Monomertröpfchen beträgt 231 µm. Man erhält 605 g eines kugelförmigen, mikroverkapselten Polymerisates ohne Oberflächenbelag. Das Polymerisat erscheint optisch transparent; die mittlere Teilchengröße beträgt 220 µm. Das Polymerisat besitzt einen Quellungsindex von 6,6 und einen löslichen Anteil von 2,4 %.

### Beispiel 3 (erfindungsgemäß)

### Herstellung eines mikroverkapselten Polymerisats ohne Oberflächenbelag

Versuchsdurchführung analog Beispiel 1, jedoch wird als Monomer eine Mischung aus 1,5 Gew.-% Divinylbenzol und 0,9 Gew.-% Ethylstyrol (63%, handelsübliches Isomerengemisch aus Divinylbenzol und Ethylstyrol), 0,5 Gew.-% tert.Butylperoxy-2-ethylhexanoat und 97,1 Gew.% Styrol eingesetzt. Die mittlere Größe der mikroverkapselten Monomertröpfchen beträgt 275 µm. Man erhält 605 g eines kugelförmigen, mikroverkapselten Polymerisates ohne Oberflächenbelag. Das Polymerisat erscheint optisch transparent; die mittlere Teilchengröße beträgt 260 µm. Das Polymerisat besitzt einen Quellungsindex von 3,9 und einen löslichen Anteil von 0,35 %.

### Beispiel 4 (erfindungsgemäß)

### Herstellung einer mikroverkapselten Polymerisat ohne Oberflächenbelag

Versuchsdurchführung analog Beispiel 1, jedoch wird als Monomer eine Mischung aus 5 % Divinylbenzol und 3 % Ethylbenzol (gemeinsam eingesetzt als 63 %, handelsübliches Isomerengemisch aus Divinylbenzol und Ethylstyrol), 0,5 % tert. Butylperoxy-2-ethylhexanoat und 91,5 % Styrol eingesetzt. Die mittlere Größe der mikroverkapselten Monomertröpfchen beträgt 350 µm. Man erhält 605 g eines kugelförmigen, mikroverkapselten Polymerisates ohne Oberflächenbelag. Das Polymerisat erscheint optisch transparent; die mittlere Teilchengröße beträgt 332 µm. Das Polymerisat besitzt einen Quellungsindex von 2,1 und einen löslichen Anteil von 0,1 %.

### Beispiel 5 (Vergleichsbeispiel)

### Herstellung eines mikroverkapselten Polymerisats mit starkem Oberflächenbelag, hohem Quellungsindex und geringem löslichen Anteil

Versuchsdurchführung analog Beispiel 1, jedoch wird kein Resorcin eingesetzt. Man erhält 605 g eines kugelförmigen, mikroverkapselten Polymerisates mit starkem pelzartigen Oberflächenbelag. Das Polymerisat erscheint weiß und nicht transparent. Das Polymerisat besitzt einen Quellungsindex von 6,0 und einen löslichen Anteil von 1,8 %.

### Beispiel 6 (Vergleichsbeispiel aus DE 19 647 291, Bsp. 7)

### Herstellung eines mikroverkapselten Polymerisats ohne Oberflächenbelag, jedoch mit hohem Quellungsindex und hohem löslichen Anteil.

In einem 4 l Glasreaktor werden 1580 ml VE-Wasser (VE = vollentsalztes) vorgelegt. Hierin werden 790 g einer mikroverkapselten Mischung aus 0,5 Gew.-% Divinylbenzol und 0,3 Gew.-% Ethylstyrol (gemeinsam eingesetzt als 63%, handelsübliches Isomerengemisch aus Divinylbenzol und Ethylstyrol), 0,75 Gew.% Dibenzoylperoxid und 98,45 Gew.% Styrol gegeben, wobei die Mikrokapsel aus einem mit Formaldehyd gehärteten Komplexkoazervat aus Gelatine und einem Copolymer aus Acrylamid und Acrylsäure besteht. Die mittlere Teilchengröße beträgt 231 µm. Die Mischung wird mit einer Lösung aus 2,4 g Gelatine, 4 g Natriumhydrogenphosphatdodekahydrat und 350 mg Resorcin in 80 ml VE-Wasser versetzt, langsam gerührt und unter Rühren durch Temperaturerhöhung auspolymerisiert. Der Ansatz wird über ein 32 µm-Sieb gewaschen und getrocknet. Man erhält 760 g eines kugelförmigen, mikroverkapselten Polymerisates mit glatter Oberfläche. Das Polymerisat erscheint optisch transparent, die mittlere Teilchengröße beträgt 220 µm. Das Polymerisat besitzt einen Quellungsindex von 6,6 und einen löslichen Anteil von 8,5 %.

## Patentansprüche

1. Verfahren zur Herstellung mikroverkapselter Polymere hoher Oberflächenqualität durch Polymerisation von Monomertröpfchen, enthaltend mindestens einen aliphatischen Peroxyester als Initiator, die in (in wäßriger Phase suspendierten) Mikrokapseln enthalten sind wobei die wäßrige Phase mindestens eine hydroxyaromatische Verbindung als Polymerisationsinhibitor enthält, der lösliche Anteil unter 6 % liegt und der Quellungsindex zwischen 1,3 und 9 liegt, dadurch gekennzeichnet, daß man
a) 34 bis 99,7 Gew.-% Monomer
b) 0,1 bis 15 Gew.-% Vernetzer und
c) 0,2 bis 1,0 Gew.-% Peroxyester und
d) 0-50 Gew.-% Zusatzstoffe
einsetzt und die Prozentangaben sich auf die Summe der Komponente a) bis c) beziehen

2. Verfahren nach Anspruch 1, dadurch gekennzeichnet, daß man
a) 34-99,2 Gew.-% Monomer,
b) 0,6-15 Gew.-% Vernetzer,
c) 0,2 bis 1 Gew.-% Peroxyester und
d) 0-50 Gew.-% Zusatzstoffe
einsetzt.

3. Verfahren nach Anspruch 1, dadurch gekennzeichnet, daß als Monomer Styrol eingesetzt wird.

4. Verfahren nach Anspruch 1, dadurch gekennzeichnet, daß der Polymerisationsinhibitor eine unsubstituierte hydroxyaromatische Verbindung ist.

5. Verfahren nach Anspruch 1, dadurch gekennzeichnet, daß die Menge Polymerisationsinhibitor 10 bis 1.000 ppm, bezogen auf die Summe (wäßrige Phase + Inhibitor) beträgt.
